(19) Europäisches Patentamt
European Patent Office
Office européen des brevets

(11) **EP 4 667 134 A1**

(12) **EUROPÄISCHE PATENTANMELDUNG**

(43) Veröffentlichungstag:
**24.12.2025 Patentblatt 2025/52**

(21) Anmeldenummer: **24182574.4**

(22) Anmeldetag: **17.06.2024**

(51) Internationale Patentklassifikation (IPC):
**B22D 11/16** (2006.01) **G01D 5/48** (2006.01)

(52) Gemeinsame Patentklassifikation (CPC):
**B22D 11/16; B22D 11/1226; B22D 11/128; B22D 11/20; G01D 5/485**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Primetals Technologies Austria GmbH**
**4031 Linz (AT)**

(72) Erfinder:
• **Gruber, Christian**
 **4225 Luftenberg (AT)**

• **Guttenbrunner, Josef**
 **4522 Sierning (AT)**
• **Starrermair, Michael**
 **4493 Wolfern (AT)**
• **Wimmer, Franz**
 **4752 Riedau (AT)**
• **Winkler-Ebner, Bernhard**
 **4470 Enns (AT)**
• **Ziegler, Günter**
 **4470 Enns (AT)**

(74) Vertreter: **Metals@Linz**
**Primetals Technologies Austria GmbH**
**Intellectual Property Upstream IP UP**
**Turmstraße 44**
**4031 Linz (AT)**

(54) **VORRICHTUNG UND VERFAHREN ZUR MESSUNG UND KOMPENSATION KRAFTINDUZIERTER ZUGSTANGENVERFORMUNGEN BEI EINEM STRANGGIESSSEGMENT**

(57) Die Erfindung befindet sich auf dem Gebiet der Stranggießtechnik und beschreibt eine Vorrichtung und ein Verfahren zur Messung und Kompensation kraftinduzierter Zugstangenverformungen bei einem Stranggießsegment.

Die Messeinrichtung erfasst einen Verfahrwegs eines Kolbens eines hydraulischen Segmentzylinders eines Stranggießsegments sowie eine Zugkraft einer Zugstange, die einen Innen- und Außenrahmen verbindet. Weiters werden ein Verfahren zur Regelung eines Gießspalts und eine Regeleinrichtung beschrieben. Die Funktionsweise des Wegaufnehmers beruht auf dem magnetostriktiven Effekt, der in dem Messstab hervorgerufen wird, wobei der magnetostriktive Effekt durch mindestens eine an eine bestimmte Stelle dieses Messstabes geführte erste Magnetanordnung hervorgerufen wird.

Parallel zur Zugstange verläuft ein kraftfreier Referenzstab, wobei an einem Ende des Referenzstabs eine zweite Magnetanordnung befestigt ist.

Der Wegaufnehmer ermittelt den Abstand zwischen der ersten Magnetanordnung und einer Referenzebene sowie den Abstand (x2) zwischen der zweiten Magnetanordnung und der Referenzebene. Damit kann eine Zugstangenlängung ermittelt werden bzw. ein Gießspalt geregelt werden.

Fig. 1

**Beschreibung**

Gebiet der Technik

Die vorliegende Erfindung befindet sich auf dem Gebiet der Stranggießtechnik und beschreibt eine Messeinrichtung zur Messung eines Verfahrwegs eines Kolbens eines hydraulischen Segmentzylinders eines Stranggießsegments, sowie zur Ermittlung einer Zugkraft einer Zugstange zur Verbindung eines Segment-Innen und Außenrahmens.

Weiter wird ein Verfahren zur Regelung eines Gießspalts eines Stranggießsegments beschrieben, sowie eine Regeleinrichtung zur Durchführung des beschriebenen Verfahrens.

Stand der Technik

Beim Stranggießen von Stahl kommen zur Führung und Stützung des erstarrenden Strangs Stranggießsegmente zum Einsatz. Diese Stranggießsegmente umfassen eine sogenannte Festseite, auch Außenrahmen genannt, sowie eine Losseite, auch Innenrahmen genannt.

Innen und Außenrahmen der Stranggießsegmente sind üblicherweise durch Zugstangen miteinander verbunden. Diese Zugstangen sind meist mit am Innenrahmen angeordneten Hydraulikzylindern verbunden und ermöglichen ein Einstellen bzw. eine Verstellung des Gießspalts. Hierbei können erhebliche Zugkräfte auftreten. Da eine gewisse Schiefstellung der Segment-Innen und Außenrahmen relativ zueinander zulässig ist, beispielsweise zum Einstellen eines keilförmigen Gießspalts, müssen die Zugstangen elastisches Verbiegen zulassen, außer es wäre eine entsprechende gelenkige Lagerung vorhanden. Daher werden die Zugstangen schlank ausgeführt, wodurch ihre Zugsteifigkeit limitiert wird. Somit erfahren die Zugstangen in Abhängigkeit der Belastungen während des Stranggießbetriebs erheblich Längsdehnungen.

Eine Wegmesseinrichtung eines mit der Zugstange verbundenen Hydraulikzylinders, kann aber nur den Verfahrweg des Zylinders erfassen. Eine Dehnung der Zugstange wird durch eine solche am Hydraulikzylinder angebrachte Wegmesseinrichtung nicht erfasst.

Daher müssen beim Steuern/Regeln des Gießspaltes auf Basis der Messung der Verfahrwege von Hydraulikzylindern auch die Dehnungen der Zugstangen berücksichtigt werden.

Eine bekannte Möglichkeit, die Dehnung einer Zugstangen zu berücksichtigen besteht darin, die Kraft, die der Hydraulikzylinder auf die Zugstange überträgt, zu bestimmen, und über eine bekannte Steifigkeit der Zugstange eine Dehnung bzw. Längenänderung zu ermitteln. Eine solche Kraftbestimmung kann beispielsweise indirekt über eine Druckmessung des Hydraulikmediums in den Kammern der Hydraulikzylinder erfolgen. Eine weitere bekannte Möglichkeit basiert auf der Auswertung der Verformung von Dehnmessstreifen, die an entsprechend belasteten Maschinenelementen aufgeklebt sind.

In EP3493929B1 wird ein Verfahren zum Einstellen eines Gießspaltes an einer Strangführung einer Stranggießanlage zwecks Sicherstellung eines einwandfreien Gießbeginns und eines störungsfreien Gießens beschrieben. Das Verfahren ist dadurch gekennzeichnet, dass der Gießspalt vor Gießbeginn gemäß einem idealen Verlauf der Strangdicke über die Länge der Strangführung unter der Annahme, dass keine Kräfte vom Strang auf die Strangführung wirken, über ein Wegmesssystem eingestellt wird.

Nach Gießbeginn wird ein kontinuierlich und sprungstellenfrei verlaufender Gießspalt unter Betriebsbelastung eingestellt, wobei für die Einstellung des Gießspaltes unter Betriebsbelastung die Betriebsbelastung rechnerisch bestimmt wird und diese Betriebsbelastung sowie den Gießspalt beeinflussende Steifigkeiten von Bauteilen der Strangführung zur Berechnung von Korrekturwerten für die Einstellung des Gießspaltes berücksichtigt werden.

Zusammenfassung der Erfindung

Die Aufgabe der vorliegenden Erfindung besteht darin, eine Messeinrichtung zur Messung eines Verfahrwegs eines Kolbens eines hydraulischen Segmentzylinders eines Stranggießsegments zur Verfügung zu stellen. Diese umfasset einen Wegaufnehmer und einen Messstab,
wobei die Funktionsweise des Wegaufnehmers auf dem magnetostriktiven Effekt beruht, der in dem Messstab hervorgerufen wird.

Der magnetostriktive Effekt wird durch mindestens eine an eine bestimmte Stelle dieses Messstabes geführte erste Magnetanordnung hervorgerufen,
wobei der Segmentzylinder über eine Zugstange eine Festseite und eine Losseite des Stranggießsegments verbindet.

Der Messstab ragt ins Innere der Zugstange und an einem Ende der Zugstange ist die erste Magnetanordnung befestigt.

Parallel zur Zugstange verläuft ein kraftfreier Referenzstab,

wobei an einem Ende des Referenzstabs eine zweite Magnetanordnung befestigt ist. Das andere Ende des Referenzstabs ist mit der Zugstange verbunden, wobei die zweite Magnetanordnung an eine weitere Stelle des Messstabs geführt wird.

Der Wegaufnehmer ermittelt einen ersten Abstand zwischen der ersten Magnetanordnung und einer Referenzebene
sowie einen zweiten Abstand zwischen der zweiten Magnetanordnung und der Referenzebene.

In den ersten Abstand geht der Verfahrweg des Kolbens des hydraulischen Segmentzylinders direkt ein.

Dehnungen bzw. Längenänderungen der Zugstange beeinflussen den ersten Abstand hingegen nicht.

In den zweiten Abstand geht der Abstand der Losseite von der Festseite über den kraftfreien Referenzstab direkt ein. der Verfahrweg des Kolbens beeinflusst diesen nicht. Daher entspricht die Differenz dieser beiden Abstände einer Längung der Zugstange, sofern die Verformung weiterer Maschinenelemente vernachlässigt wird. In einer weiteren bevorzugten Ausführungsform bildet die Messeinrichtung aus dem zweiten Abstand und dem ersten Abstand eine Differenz und ermittelt aus dieser Differenz und einer gegebenen Steifigkeit der Zugstange eine Zugkraft beziehungsweise eine Stützkraft.

In die Differenz zwischen zweitem Abstand und erstem Abstand geht eine Längung der Zugstange direkt ein.

Längt sich die Zugstange durch eine Zugbelastung also um 1 mm, so vergrößert sich die Differenz zwischen dem zweiten Abstand und dem ersten Abstand ebenso um 1 mm.

Ist die Steifigkeit c der Zugstange bekannt und vernachlässigt man die Steifigkeit weiterer Maschinenelemente, so kann die Zugkraft F der Zugstange aus der Längung der Zugstange $\Delta x$ über das Gesetz von Hooke zu

$$F = c \cdot \Delta x$$

ermittelt werden.

In einer weiteren bevorzugten Ausführungsform weist die Zugstange entlang einer Längsachse eine Bohrung auf, in der der Referenzstab geführt wird.

Eine Führung bzw. Lagerung des kraftfreien und biegeweichen Referenzstabs in einer Bohrung des Zugstabs, und somit in etwa im Bereich seiner neutralen Faser ist besonders vorteilhaft. In diesem Fall wirkt sich ein reines Verbiegen des Zugstabs nicht wesentlich auf eine Verschiebung des Referenzstabs relativ zum Zugstab aus und führt somit zu keiner Differenz zwischen dem zweiten Abstand und dem ersten Abstand.

In weiteren bevorzugten Ausführungsformen umfasst ein Stranggießsegment mindestens eine beschriebene Messeinrichtung beziehungsweise eine Stranggießmaschine mindestens ein beschriebenes Stranggießsegment.

In einer weiteren bevorzugten Ausführungsform kommt ein Verfahren zur Regelung eines Gießspalts eines Stranggießsegments mittels der beschriebenen Messeinrichtung zur Anwendung. Dabei wird aus dem mit der Messeinrichtung ermittelten Gießspalt und einem Sollwert des Gießspalts eine Differenz gebildet. Daraus wird eine Stellgröße zur Ansteuerung eines Antriebs, bevorzugt zur Ansteuerung von Hydraulikventilen zur Versorgung eines Hydraulikzylinders derart ermittelt, dass die Differenz zwischen Sollwert und ermitteltem Gießspalt möglichst gegen null geht.

Der Messwert des Gießspalts wird direkt aus dem zweiten Abstand ermittelt. In diesen geht der Abstand der Losseite von der Festseite über den kraftfreien Referenzstab direkt ein. Der Verfahrweg des Kolbens des hydraulischen Segmentzylinders bleibt unberücksichtigt. Ein Vorteil dieses Systems ist sein einfacher Aufbau und die Verarbeitung nur einer Messgröße. Allerdings steht dem Verfahren zur Regelung keine Information über die Dehnung der Zugstange oder die Zugkraft der Zugstange zur Verfügung. Das kann zu nachteiligen Auswirkungen auf beispielsweise das Zeitverhalten des Regelkreises führen. In einer weiteren bevorzugten Ausführungsform wird die Stellgröße als erster Sollwert an einen inneren Regelkreis gegeben, wobei aus dem ersten Sollwert und einer mit der Messeinrichtung gemessenen Kolbenposition eine erste Differenz gebildet wird, woraus eine erste Stellgröße zur Ansteuerung eines Antriebes ermittelt wird.

Ein äußerer und ein innerer Regelkreis bilden einen kaskadierten Regelkreis. Der Messwert des Gießspalts wird direkt aus dem zweiten Abstand ermittelt. Die Kolbenposition wird direkt aus dem ersten Abstand ermittelt. Die Differenz zwischen dem Sollwert für den Gießspalt, oder zweiten Sollwert, und dem zweiten Abstand ergibt einen zweiten Regelfehler des äußeren oder zweiten Regelkreises. Daraus wird durch einen zweiten Regler eine zweite Stellgröße ermittelt. Diese wird als erster Sollwert an den inneren oder ersten Regelkreis gegeben. Der innere Regelkreis regelt den Verfahrweg des Stellantriebs. Die Differenz zwischen dem Sollwert für den Stellantrieb, oder ersten Sollwert, und der Position des Stellantriebs ergibt einen ersten Regelfehler des inneren oder ersten Regelkreises. Daraus wird durch einen ersten Regler eine erste Stellgröße für den Stellantrieb ermittelt. Die Stellgröße ist beispielsweise ein Ansteuersignal für Hydraulikventile, über die der hydraulische Segmentzylinder versorgt wird. Durch das Verfahren des Kolbens wirken Kräfte auf das Stranggießsegment, wodurch es zu Strukturverformungen, umfassend eine Längung der Zugstange, kommt. Durch die Messung des zweiten Abstandes kann der Einfluss der Längung der Zugstange auf den Gießspalt kompensiert werden.

Ein Vorteil dieses Systems ist seine größere Flexibilität durch die Verarbeitung von zwei Messgrößen und das Vorhandensein von zwei Reglern. Dem Verfahren zur Regelung steht in diesem Fall auch Information über die Dehnung der Zugstange bzw. die Zugkraft der Zugstange zur Verfügung. Somit kann eine Optimierung des Zeitverhaltens des Regelkreises auf Basis bekannter Verfahren der Regelungstechnik, beispielsweise Polvorgabe, erfolgen.

In einer weiteren bevorzugten Ausführungsform ist ein Computerprogrammprodukt umfasst, umfassend Befehle, die bei der Ausführung eines Programms durch einen Computer diesen veranlassen, eines der beschriebenen Verfahren/die Schritte der beschriebenen Verfahren auszuführen.

In einer weiteren bevorzugten Ausführungsform ist eine Regeleinrichtung zur Durchführung eines der beschrieben Verfahren umfasst, umfassend eine beschriebene Messeinrichtung, ein Rechenwerk, ein Speicherwerk, ein Programm sowie Schnittstellen zur Eingabe und Ausgabe von Signalen.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

Fig. 1 eine Seitenansicht eines Stranggießsegments einer Stranggießmaschine, umfassend hydraulische Segmentzylinder mit Wegaufnehmern,

Fig. 2 eine Darstellung eines Segmentzylinders mit Kolben, Zugstange und Referenzstab sowie einer Messeinrichtung zur Messung der Verfahrwege des Kolbens und des Referenzstabs,

Fig. 3 eine Darstellung eines Regelkreises zur Regelung eines Gießspalts eines Stranggießsegments unter Verwendung einer Messeinrichtung zur Messung des Abstandes ($x_2$),

Fig. 4 eine Darstellung eines kaskadierten Regelkreises zur Regelung eines Gießspalts eines Stranggießsegments, der unter Verwendung einer Messeinrichtung zur Messung des Abstandes ($x_1$) und des Abstandes ($x_2$).

Beschreibung der Ausführungsformen

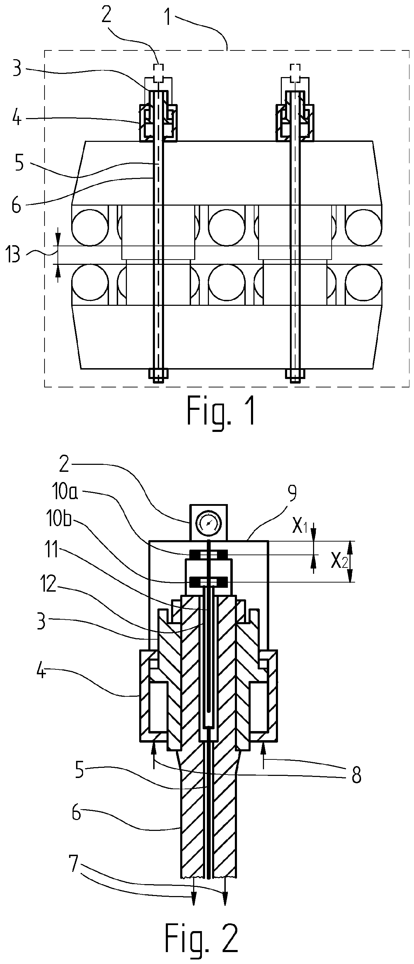

Fig. 1 zeigt eine Ausführungsform der Erfindung in Form einer Seitenansicht eines Stranggießsegments 1 einer Stranggießmaschine, umfassend hydraulische Segmentzylinder 4 und Wegaufnehmer 2. Das dargestellte Stranggießsegment besitzt vier Segmentzylinder, also zwei je Seite. Mithilfe der Segmentzylinder kann der Gießspalt 13 verstellt werden. Dies erfolgt bevorzugt über eine Positionsregelung der Segmentzylinder. Werden die Segmentzylinder in unterschiedliche Positionen gefahren, kann auch ein keilförmiger Gießspalt eingestellt werden.

Die hydraulischen Segmentzylinder übertragen hohe Kräfte, welche zur Stützung und Führung des Strangs im Gießspalt benötigt werden. Diese Kräfte werden über die Stützkraft 8 bzw. über die Zugkraft 7 der Zugstangen ins Stranggießsegment eingeleitet.

Um bei Einstellen eines keilförmigen Gießspalts eine gewisse Biegung der Zugstangen zuzulassen, sind diese schlank ausgeführt. Dies wiederum führt zu einer erheblichen Dehnung der Zugstangen, die bei einer Regelung des Gießspalts nicht zu vernachlässigen ist.

Fig. 2 zeigt eine Darstellung eines Segmentzylinders 4 mit dem Kolben 3 und der Zugstange 6. Weiters sind der Wegaufnehmer 2, der Referenzstab 5, die erste Magnetanordnung 10a und die zweite Magnetanordnung 10b dargestellt.

Mithilfe des Wegaufnehmers 2 kann zunächst der Abstand $x_1$ ermittelt werden. $x_1$ ist die relative Position der ersten Magnetanordnung 10a am Messstab 11, in dessen Längsrichtung betrachtet. $x_1$ ist auch der Verfahrweg des Kolbens 3 im Zylinder 4.

Wird der in der Figur dargestellte Segmentzylinder derart mit Hydraulikdruck beaufschlagt, dass der Gießspalt verringert wird, so wird auf die Zugstange eine Kraft 7 bzw. auf den Segmentzylinder eine Kraft 8 ausgeübt.

Die dadurch hervorgerufenen Spannungen in der Zugstange führen zu Verformungen, die im Wesentlichen eine Längung der Zugstange bewirken.

Diese Längung der Zugstange führt dazu, dass aus der Messung des Verfahrwegs des Kolbens der Gießspalt 12 nicht ohne weiteres bestimmt werden kann.

Um den Gießspalt zu ermitteln, wird parallel zur Zugstange der Referenzstab kraftfrei geführt. Der Referenzstab ist an einem Ende mit der Zugstange verbunden. An seinem anderen Ende befindet sich die zweite Magnetanordnung 10b. Das Ende des Referenzstabs, an dem sich die zweite Magnetanordnung befindet, wird durch die Hülse 12 gebildet, in deren inneres der Messstab reicht.

Mithilfe des Wegaufnehmers kann sodann der Abstand $x_2$ ermittelt werden. $x_2$ ist die relative Position der zweiten Magnetanordnung 10b am Messstab, in dessen Längsrichtung betrachtet. $x_2$ ist auch der Verfahrweg des Kolbens 3 im Zylinder 4 minus die auf den Referenzstab bezogene Längung der Zugstange. $x_2$ entspricht somit unter Vernachlässigung weiterer Verformungen dem Gießspalt.

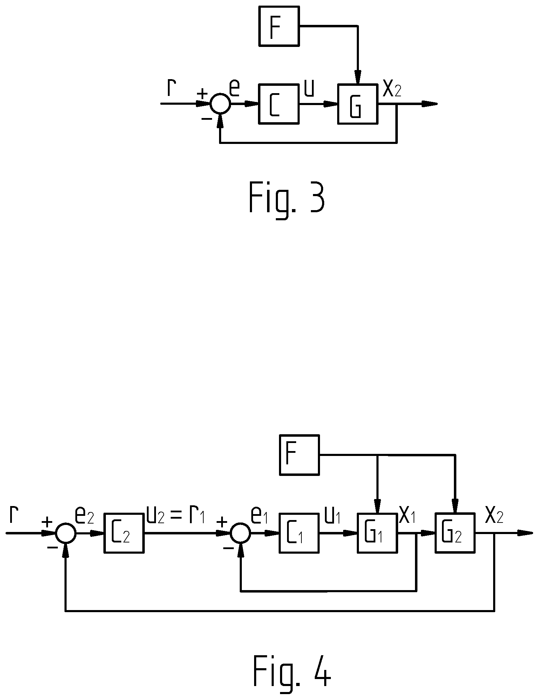

Fig. 3 zeigt eine Darstellung eines Regelkreises zur Regelung eines Gießspalts 13 eines Stranggießsegments 1 unter Verwendung einer Messeinrichtung zur Messung des Abstandes $x_2$. $x_2$ kann als Gießspalt interpretiert werden, wenn Verformungen von Bauteilen des Stranggießsegments, abgesehen von der einer Längung der Zugstange, vernachlässigt werden. Der Sollwert r für den Gießspalt wird mit dem Messwert des Abstandes $x_2$ verglichen. Aus der Regeldifferenz $e = r - x_2$ wird durch den Regler C die Stellgröße u für die Strecke G, die einen Stellantrieb umfasst, ermittelt. Die Stellgröße ist beispielsweise ein Ansteuersignal für Hydraulikventile, über die ein hydraulischer Segmentzylinder 4 versorgt wird. Der Abstand $x_2$ kann nicht ohne Weiteres aus dem Verfahrweg des Stellantriebes ermittelt werden, da die Kraft F, die über die Zugstange auf den Stellantrieb wirkt, eine Längung der Zugstange bewirkt. Durch die Messung von $x_2$ kann dieser Einfluss kompensiert werden.

Fig. 4 zeigt eine Darstellung eines kaskadierten Regelkreises zur Regelung eines Gießspalts 13 eines Stranggießsegments 1. Eine Messeinrichtung misst die Abstände $x_1$ und $x_2$. $x_1$ kann als Verfahrweg eines Stellantriebs, $x_2$ kann als Gießspalt interpretiert werden. Der Sollwert für den Gießspalt r wird in einem äußeren Regelkreis mit dem Messwert des Abstandes $x_2$ verglichen. Aus dem Regelfehler $e_2 = r - x_2$ wird durch den Regler $C_2$ die Stellgröße $u_2$ ermittelt. Diese wird als erster Sollwert $r_1$ an den inneren Regelkreis gegeben. Der innere Regelkreis regelt den Verfahrweg des Stellantriebs. Die Differenz zwischen dem ersten Sollwert und der Position des Stellantriebs wird zu $e_1 = r_1 - x_1$ ermittelt und an den ersten Regler $C_1$ gegeben. Dieser ermittelt eine erste Stellgröße für die Strecke $G_1$, die den Stellantrieb umfasst. Die Stellgröße ist beispielsweise ein Ansteuersignal für Hydraulikventile, über die ein hydraulischer Segmentzylinder 4 versorgt wird. Durch das Verfahren des Segmentzylinders wirken Kräfte auf das Stranggießsegment, wodurch es zu Strukturverformungen, umfassend eine Längung der Zugstange, kommt. Modelliert wird diese Längung der Zugstange in der Strecke $G_2$. Damit ist Einfluss der Kraft F auf den Gießspalt $x_2$ erfasst. Der Einfluss der Kraft F auf den Stellantrieb wird in G, erfasst. Durch die Messung von $x_2$ kann der Einfluss der Längung der Zugstange auf den Gießspalt kompensiert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Stranggießsegment |
|------|--------------------------|
| 2 | Wegaufnehmer |
| 3 | Kolben |
| 4 | hydraulischer Segmentzylinder |
| 5 | Referenzstab |
| 6 | Zugstange |
| 7 | Zugkraft |
| 8 | Stützkraft |
| 9 | Referenzebene |
| 10a | erste Magnetanordnung |
| 10b | zweite Magnetanordnung |
| 11 | Messstab |
| 12 | Hülse |
| 13 | Gießspalt |

**Patentansprüche**

1. Messeinrichtung zur Messung eines Verfahrwegs eines Kolbens (3) eines hydraulischen Segmentzylinders (4) eines Stranggießsegments (1) umfassend einen Wegaufnehmer (2) und einen Messstab (11),

   wobei die Funktionsweise des Wegaufnehmers auf dem magnetostriktiven Effekt beruht, der in dem Messstab hervorgerufen wird,
   wobei der magnetostriktive Effekt durch mindestens eine an eine bestimmte Stelle dieses Messtabes geführte erste Magnetanordnung (10a) hervorgerufen wird,
   wobei der Segmentzylinder über eine Zugstange (6) eine Festseite und eine Losseite des Stranggießsegments verbindet,
   wobei der Messstab ins Innere der Zugstange ragt und an einem Ende der Zugstange die erste Magnetanordnung befestigt ist,
   **dadurch gekennzeichnet, dass**
   parallel zur Zugstange ein kraftfreier Referenzstab (5) verläuft,
   wobei an einem Ende des Referenzstabs eine zweite Magnetanordnung (10b) befestigt ist,
   und das andere Ende des Referenzstabs mit der Zugstange verbunden ist, wobei die zweite Magnetanordnung an eine weitere Stelle des Messtabs geführt wird
   und der Wegaufnehmer den Abstand ($x_1$) zwischen der ersten Magnetanordnung und einer Referenzebene (9)
   sowie den Abstand ($x_2$) zwischen der zweiten Magnetanordnung und der Referenzebene ermittelt.

2. Messeinrichtung nach Anspruch 1,

   wobei aus dem Abstand ($x_2$) und dem Abstand ($x_1$) eine Differenz ($x_2 - x_1$) gebildet wird,
   und aus dieser Differenz und einer gegebenen Steifigkeit der Zugstange (6) eine Zugkraft (7) beziehungsweise eine Stützkraft (8) ermittelt wird.

3. Messeinrichtung nach Anspruch 1,
   wobei die Zugstange entlang einer Längsachse eine Bohrung aufweist, in der der Referenzstab geführt wird.

4. Stranggießsegment, umfassend mindestens eine Messeinrichtung nach Anspruch 1

5. Stranggießmaschine, umfassend mindestens ein Stranggießsegment nach Anspruch 4

6. Verfahren zur Regelung eines Gießspalts eines Stranggießsegments mittels einer Messeinrichtung nach Anspruch 1, wobei aus dem mit der Messeinrichtung ermittelten Gießspalt ($x_2$) und einem Sollwert ($r$) des Gießspalts eine Differenz gebildet wird und eine Stellgröße ($u$) zur Ansteuerung eines Antriebs, bevorzugt zur Ansteuerung von Hydraulikventilen zur Versorgung eines Hydraulikzylinders derart ermittelt wird, dass die Differenz zwischen Sollwert und ermitteltem Gießspalt möglichst gegen null geht.

7. Verfahren nach Anspruch 6,

   wobei die Stellgröße als erster Sollwert ($r_1$) an einen inneren Regelkreis gegeben wird,
   wobei aus dem ersten Sollwert und einer mit der Messeinrichtung gemessenen Kolbenposition ($x_1$) eine erste Differenz $r_1 - x_1$ gebildet wird, woraus eine erste Stellgröße ($u_1$) zur Ansteuerung eines Antriebes ermittelt wird.

8. Computerprogrammprodukt, umfassend Befehle, die bei der Ausführung eines Programms durch einen Computer diesen veranlassen, das Verfahren/die Schritte des Verfahrens nach einem der Ansprüche 6 oder 7 auszuführen.

9. Regeleinrichtung zur Durchführung des Verfahrens nach einem der Ansprüche 6 oder 7, umfassend eine Messeinrichtung nach Anspruch 1, ein Rechenwerk, ein Speicherwerk, ein Programm nach Anspruch 8 sowie Schnittstellen zur Eingabe und Ausgabe von Signalen.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

EP 24 18 2574

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 209 619 B1 (MOERWALD KARL [AT] ET AL) 3. April 2001 (2001-04-03) * Abbildungen 6, 7, 9 * * Ansprüche 1, 12, 14-16 * ----- | 1-9 | INV. B22D11/16 G01D5/48 |
| X | KR 2017 0073633 A (PRIMETALS TECHNOLOGIES AUSTRIA GMBH [AT]) 28. Juni 2017 (2017-06-28) * Abbildung 7 * * Ansprüche 1, 10-13 * * Absatz [0030] - Absatz [0032] * ----- | 1-9 | |

RECHERCHIERTE
SACHGEBIETE (IPC)

B22D
G01D

Der vorliegende Recherchenbericht wurde für alle Patentansprüche erstellt

| Recherchenort | Abschlußdatum der Recherche | Prüfer |
|---|---|---|
| Den Haag | 9. Oktober 2024 | Porté, Olivier |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 18 2574

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2024

| Im Recherchenbericht angeführtes Patentdokument | Datum der Veröffentlichung | Mitglied(er) der Patentfamilie | | Datum der Veröffentlichung |
|---|---|---|---|---|
| US 6209619 B1 | 03-04-2001 | AT | 404806 B | 25-03-1999 |
| | | EP | 0898503 A1 | 03-03-1999 |
| | | JP | 2000509333 A | 25-07-2000 |
| | | US | 6209619 B1 | 03-04-2001 |
| | | WO | 9741984 A1 | 13-11-1997 |
| KR 20170073633 A | 28-06-2017 | AT | 516412 A1 | 15-05-2016 |
| | | CN | 107107176 A | 29-08-2017 |
| | | EP | 3212351 A1 | 06-09-2017 |
| | | KR | 20170073633 A | 28-06-2017 |
| | | RU | 2017118146 A | 29-11-2018 |
| | | WO | 2016066337 A1 | 06-05-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3493929 B1